# EUROPÄISCHE PATENTSCHRIFT

(11) **EP 1 252 677 B1**
(45) Veröffentlichungstag und Bekanntmachung des Hinweises auf die Patenterteilung: **26.05.2004**
(21) Anmeldenummer: 01909479.6
(22) Anmeldetag: 17.01.2001
(51) Int. Cl.: H01M 8/04

(54) **DOSIEREINHEIT UND VERFAHREN ZUR DOSIERUNG FLÜSSIGER ODER GASFÖRMIGER EDUKTE FÜR EIN BRENNSTOFFZELLENSYSTEM**
DOSING UNIT AND METHOD FOR DOSING LIQUID OR GASEOUS EDUCTS FOR A FUEL CELL SYSTEM
UNITE DE DOSAGE ET PROCEDE POUR DOSER DES EDUITS LIQUIDES OU GAZEUX POUR UN SYSTEME DE CELLULES ELECTROCHIMIQUES

(30) Priorität: 19.01.2000 DE 10002001
(43) Veröffentlichungstag der Anmeldung: 30.10.2002
(73) Patentinhaber: ROBERT BOSCH GMBH, 70442 Stuttgart (DE)
(72) Erfinder: NAU, Michael, 72175 Dornhan/Aischfeld (DE); BENNINGER, Nikolaus, 71665 Vaihingen (DE); BAREIS, Marc, 71706 Markgroeningen (DE); ILGNER, Frank, 70499 Stuttgart (DE); HARNDORF, Horst, 71701 Schwieberdingen (DE)
(86) Internationale Anmeldenummer: PCT/DE2001/000167
(87) Internationale Veröffentlichungsnummer: WO 2001/054215

(56) Entgegenhaltungen:
- WO-A-99/30380
- DE-A- 2 600 572

## Beschreibung

Die Erfindung betrifft eine Dosiereinheit und ein Verfahren zur Dosierung flüssiger oder gasförmiger Edukte für ein Brennstoffzellensystem nach dem Oberbegriff der unabhängigen Ansprüche.

### Stand der Technik

Unter den alternativen Antriebskonzepten für Kraftfahrzeuge finden zur Zeit vor allem brennstoffzellengestützte Systeme eine verstärkte Aufmerksamkeit. Diese Systeme beinhalten üblicherweise PEM-Brennstoffzellen (PEM: Polymer Electrolyte Membrane), die mit Wasserstoff und Luft als Energieträger betrieben werden.

Da sich die Betankung und Speicherung von Wasserstoff im Kraftfahrzeug nach wie vor als problematisch erweist, wird der Wasserstoff in einer vorgeschalteten Reformerstufe aus gut zu handhabenden Kraftstoffen wie beispielsweise Methanol, Methan, Diesel oder Benzin je nach Bedarf direkt "on board" hergestellt und sofort verbraucht. In derartigen Brennstoffzellensystemen muß demnach eine Vielzahl von Stoffströmen flexibel und trotzdem sehr genau dosiert werden. Dies gilt sowohl für flüssige Komponenten wie Reinstwasser, Kraftstoffe und Kühlwasser als auch für gasförmige Medien wie Luft oder Methan. Problematisch bei der Dosierung ist vor allem, daß Druckschwankungen in den Transportleitungen eine exakte Dosierung der einzelnen Komponenten erschweren. Diese Druckschwankungen können zum einen durch vorgeschaltete Pumpen bzw. Kompressoren erzeugt werden, jedoch auch durch die beispielsweise im Reformer ablaufenden chemischen Reaktionen, die Prozeßgase freisetzen und somit zu Druckrückschlägen führen.

In der DE 44 25 634 C1 wird ein Verfahren und eine Vorrichtung zur Dosierung von Flüssigkeiten für ein Brennstoffzellensystem beschrieben, wobei die Dosierung über die Taktzeit eines Magnetventils erfolgt und die Druckdifferenz zwischen Förderleitung und Brennstoffzellensystem über ein Differenzdruckventil reguliert wird. Diese Anordnung erzeugt durch die Verwendung getakteter Schaltventile Volumenstromschwankungen in den Transportleitungen, was zu Problemen bei den in den Reaktoren des Brennstoffzellensystems ablaufenden chemischen Umsetzungen führen kann.

In Kraftfahrzeugen werden Kraftstoffeinspritzsysteme verwendet, die eine Dosierung des Kraftstoffs bei unterschiedlichen Druckverhältnissen ermöglichen. Diese als K-Jetronic bezeichneten Systeme beinhalten eine Kombination aus einem Steuerkolben und einem Differenzdruckventil. Es handelt sich dabei um luftdruckgesteuerte Systeme deren Anwendung auf die Dosierung von Kraftstoffen beschränkt ist.

Der vorliegenden Erfindung liegt die Aufgabe zugrunde, eine Dosiereinheit für flüssige und gasförmige Komponenten für ein Brennstoffzellensystem zur Verfügung zu stellen. Dabei werden Druckschwankungen innerhalb der Transportleitungen ausgeglichen und eine exakte Dosierung ermöglicht.

### Vorteile der Erfindung

Die erfindungsgemäße Dosiereinheit und das Verfahren mit den kennzeichnenden Merkmalen der unabhängigen Ansprüche weisen den Vorteil auf, daß auch bei dynamischen Lastwechseln eine exakte Dosierung flüssiger und gasförmiger Medien ermöglicht wird, ohne daß eine aufwendige Messung von Volumenströmen mit entsprechender Regelung erforderlich ist. Da die erfindungsgemäße Dosiereinheit im Gegensatz zu getakteten Systemen ein kontinuierliches Dosierkonzept verwirklicht, werden Druckschwankungen in den Transportleitungen des Brennstoffzellensystems erfolgreich vermieden. Dies wird durch die Kombination eines Steuerkolbens mit einem Differenzdruckventil erreicht. Ein weiterer Vorteil ist, daß keine schnell bewegten Teile korrosiven Medien wie beispielsweise Reinstwasser ausgesetzt sind, was sich in einer deutlich längeren Lebensdauer der Dosiereinheit niederschlägt.

Durch die in den Unteransprüchen aufgeführten Maßnahmen sind vorteilhafte Weiterbildungen und Verbesserungen der in den unabhängigen Ansprüchen angegebenen Dosiereinheit und des Verfahrens möglich.

So ist es für eine möglichst genaue Dosierung vorteilhaft, wenn die Position des Steuerkolbens der Dosiereinheit mittels eines Wegesensors bestimmt und durch einen Proportionalmagneten variiert werden kann.

Darüber hinaus ist eine Anpassung der Dosiereinheit an die jeweiligen flüssigen oder gasförmigen Medien möglich, da in den Verbindungsleitungen zwischen dem Steuerkolben und dem Differenzdruckventil der Dosiereinheit eine Drossel angeordnet ist', durch die der Druckabfall an der Dosiereinheit abgestimmt werden kann.

Um eine extrem dynamische Dosierung zu ermöglichen, ist in einer weiteren vorteilhaften Ausgestaltung an der unteren Ventilkammer des Differenzdruckventils eine Ableitung mit einer Drossel vorgesehen. Diese gestattet eine rasche Veränderung des am Differenzdruckventil anliegenden Steuerdrucks.

Besonders vorteilhaft ist, daß für jedes Medium nur eine Förderpumpe zur Druckbereitstellung benötigt wird und die Dosierung mittels der erfindungsgemäßen Dosiereinheit erfolgen kann. Dies erübrigt den Einsatz teurer Dosierpumpen.

### Zeichnungen

Ein Ausführungsbeispiel der Erfindung ist in der Zeichnung dargestellt und in der nachfolgenden Beschreibung näher erläutert. Es zeigen Figur 1 eine schematische Darstellung eines ersten Ausführungsbeispiels der erfindungsgemäßen Dosiereinheit, Figur 2 eine schematische Darstellung der erfindungsgemäßen Dosiereinheit gemäß einem zweiten Ausführungsbeipiel und Figur 3 eine schematische Darstellung eines Brennstoffzellensystems unter Verwendung der erfindungsgemäßen Dosiereinheit.

### Ausführungsbeispiele

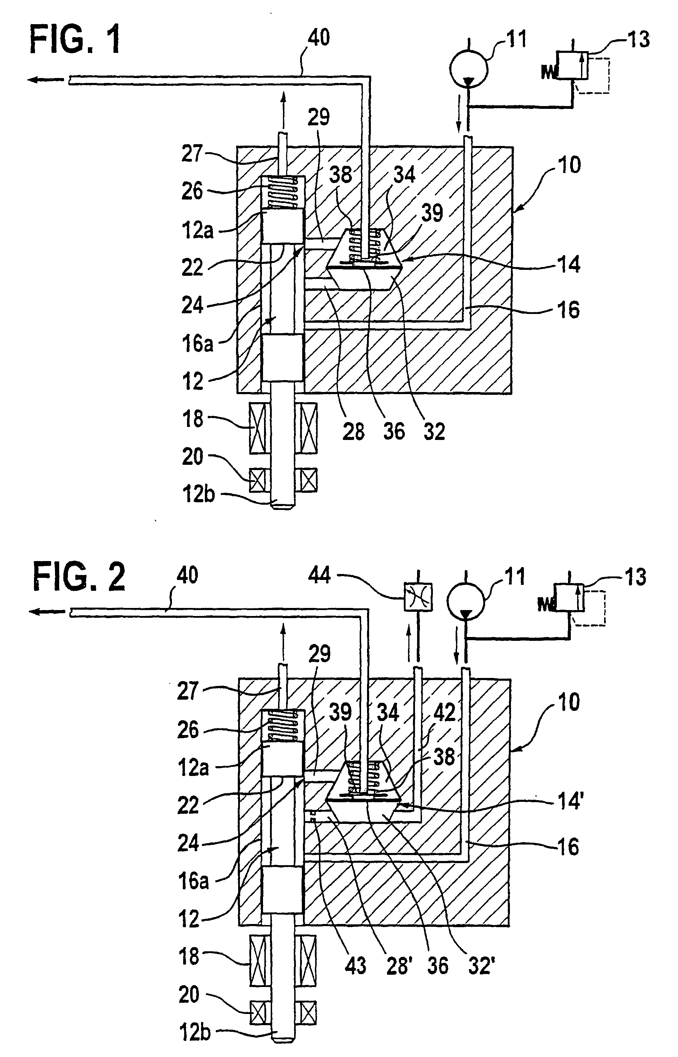

Die in Figur 1 dargestellte Dosiereinheit 10 umfaßt einen Steuerkolben 12 und ein Differenzdruckventil 14. Der Dosiereinheit 10 vorgeschaltet ist eine Förderpumpe 11 zur Förderung der in einem Brennstoffzellensystem benötigten flüssigen oder gasförmigen Medien. Zur Förderpumpe 11 kann beispielsweise ein Systemdruckregler 13 parallel geschaltet sein, der den Systemvordruck in der die Förderpumpe 11 mit der Dosiereinheit 10 verbindenden Zuleitung 16 reguliert. Die Zuleitung 16 weist innerhalb der Dosiereinheit 10 einen Zylinderkolbenabschnitt 16a auf, in dem der Steuerkolben 12 zumindest teilweise mit seinem zuleitungsseitigen Ende 12a verstellbar geführt ist. Der Zylinderkolbenabschnitt 16a weist beispielsweise einen größeren Querschnitt auf als die Zuleitung 16. Der Steuerkolben 12 befindet sich mit seinem gehäuseseitigen Ende 12b außerhalb des Zylinderkolbenabschnitts 16a. Am gehäuseseitigen Ende 12b des Steuerkolbens 12 befindet sich beispielsweise ein Proportionalmagnet 18 zur Veränderung der Position des Steuerkolbens 12 innerhalb des Zylinderkolbenabschnitts 16a.

Um die Position des Steuerkolbens 12 innerhalb des Zylinderkolbenabschnitts 16a der Zuleitung 16 möglichst gut erfassen zu können, ist am gehäuseseitigen Ende 12b des Steuerkolbens 12 weiterhin ein Wegesensor 20 angeordnet.

Der Steuerkolben 12 weist an seinem zuleitungsseitigen Ende 12a eine Steuerkante 22 auf, deren Position zusammen mit der Wandung des Zylinderkolbenabschnitts 16a einen ersten Drosselquerschnitt 24 bedingt. In dem dem zuleitungsseitigen Ende 12a des Steuerkolbens 12 vorgelagerten Bereich des Zylinderkolbenabschnitts 16a befindet sich beispielsweise eine Druck- bzw. Zugfeder 26 und eine Entlüftung 27.

Der Zylinderkolbenabschnitt 16a ist mittels zweier Verbindungsleitungen 28, 29 mit dem Differenzdruckventil 14 verbunden. Das Differenzdruckventil 14 seinerseits weist eine obere Ventilkammer 34 und eine untere Ventilkammer 32 auf. Beide Ventilkammern 32, 34 sind voneinander durch eine biegsame Membran 36 voneinander getrennt. Die Trennung kann aber auch mittels eines federgestützen beweglichen Kolbens erfolgen.

In die untere Ventilkammer 32 mündet die untere Verbindungsleitung 28, die beispielsweise eine nicht dargestellte Drossel aufweisen kann. Über die Verbindungsleitung 28 wird die untere Ventilkammer 32 mit dem von der Forderpumpe 11 erzeugten und vom Systemdruckregler 13 korrigierten Systemvordruck beaufschlagt.

In die obere Ventilkammer 34 des Differenzdruckventils 14 mundet die obere Verbindungsleitung 29. Der in der oberen Verbindungsleitung 29 und damit auch in der oberen Ventilkammer 34 herrschende Strömungsdruck wird durch die Position der Steuerkante 22 und dem dadurch bedingten Drosselquerschnitt 24 vorgegeben.

Die Membran 36 ist beispielsweise mittels einer Zug- bzw. Druckfeder 38 mit dem Gehäuse des Differenzdruckventils 14 verbunden, so daß die Membran 36 rasch und reversibel auf Änderungen der Druckverhältnisse reagieren kann.

Die obere Ventilkammer 34 weist weiterhin eine Ableitung 40 auf, über die die in die obere Ventilkammer 34 geführten flüssigen und gasförmigen Medien in dosierter Menge abgeleitet werden können. Die Ableitung 40 ragt dabei soweit in die obere Ventilkammer 34 hinein, daß zwischen der eintrittsseitigen Öffnung der Ableitung 40 und der Membran 36 ein zweiter Drosselquerschnitt 39 entsteht. Dessen Größe reguliert sich selbsttätig je nach Größe des Systemvordrucks und des durch den ersten Drosselquerschnitt 22 bedingten Strömungsdrucks. Druckschwankungen in der Zuleitung 16 und der Ableitung 40 werden ebenfalls selbsttätig ausgeglichen.

In Figur 2 ist ein zweites Ausführungsbeispiel der erfindungsgemäßen Dosiereinheit dargestellt. Es beinhaltet ein Differenzdruckventil 14`, dessen untere Ventilkammer 32' eine Ableitung 42 aufweist, die eine variable Drossel 44 umfaßt und über die das entsprechende zu dosierende Medium in einen Vorratstank zurückgeführt wird. Die untere Verbindungsleitung 28' weist eine Festdrossel 43 auf, über die der Systemvordruck reduziert wird. Die Ableitung 42 gestattet es, den in der unteren Ventilkammer 32' anliegenden Systemvordruck zu variieren und auf diesem Wege den Drosselquerschnitt 39 des Differenzdruckventils. Dies ist vor allem für schnelle Anpassungen des die Dosiereinheit 10 passierenden Volumenstroms an die im Brennstoffzellensystem auftretenden dynamischen Lastwechsel erforderlich, falls eine Steuerung über die Position des Steuerkolbens zu träge ist. Wird innerhalb der Dosiereinheit 10 zusätzlich eine Messung des Volumenstroms vorgenommen, so läßt sich mit Hilfe dieser Korrekturvorrichtung die Dosiergenauigkeit der Dosiereinheit 10 erheblich steigern.

Die Kombination eines Steuerkolbens 12 und eines Differenzdruckventils 14 mag auf den ersten Blick gegenüber einer einfachen Drosselvorrichtung als aufwendig erscheinen, sie bietet aber große Vorteile. Der von der Förderpumpe 11 erzeugte und vom Systemdruckregler 13 korrigierte Systemvordruck fällt allgemein nicht nur an einer zur Dosierung verwendeten Drosselvorrichtung ab, sondern auch an drosselnden Bauteilen innerhalb des Leitungssystems. Eine lineare Veränderung des Drosselquerschnitts einer Drosselvorrichtung führt so zu einer nicht linearen Veränderung des Strömungsdrucks im Leitungssystem. Die Kopplung zweier Drosselvorrichtungen (Steuerkolben 12 und Differenzdruckventil 14, 14'), deren Drosselquerschnitte 24, 39 sich gegenseitig bedingen, zu einer Dosiereinheit 10 führt bei einer konstanten Position des Steuerkolbens 12 zu einem konstanten Druckabfall an der Dosiereinheit 10 und zu einer Proportionalität von Druckabfall und erstem Drosselquerschnitt 24. Bei geeigneter Ausgestaltung der Steuerkante 22 ist darüber hinaus eine Proportionalität vom Kolbenhub des Steuerkolbens 12 und dem die Dosiereinheit 10 passierenden Volumenstrom gegeben.

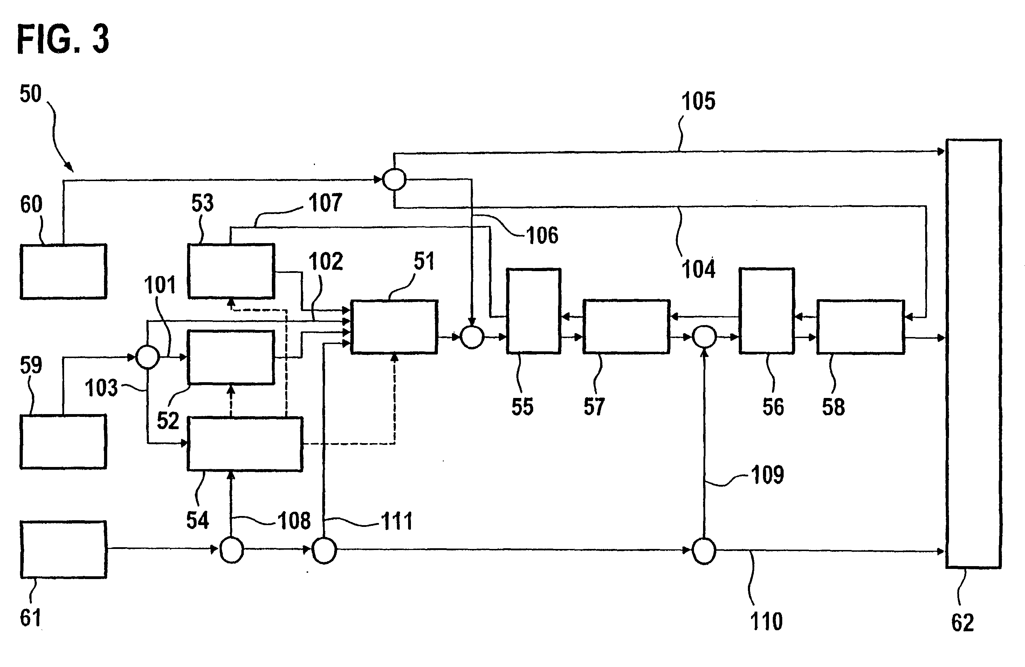

In Figur 3 ist schematisch ein Brennstoffzellensystem 50 dargestellt, an dem exemplarisch die Verwendung der erfindungsgemäßen Dosiereinheit aufgezeigt werden soll.

Die Erzeugung des für den Brennstoffzellenbetrieb benötigten Wasserstoffs findet direkt im Brennstoffzellensystem 50 in einem sogenannten Reformer 51 statt. Der Wasserstoff wird durch partielle Oxidation von Kraftstoffen unter Zusatz von wahlweise Wasserdampf, Luft oder einem Gemisch aus beidem gewonnen. Die Umsetzung erfolgt üblicherweise an einem beheizbaren Katalysator, wobei als Kraftstoffe Benzin, Diesel, Methan oder Methanol verwendet werden können. Weiterhin eignen sich auch Methanol/Wassermischungen oder Benzin/Wasseremulsionen. Alle Edukte werden dem Reformer 51 gasförmig zugeführt. Dies setzt Verdampfer für einen Kraftstoff 53 und eventuell auch für Wasser 52 voraus. Die dazu benötigte Energie kann beispielsweise über einen katalytischen Brenner 54 bereitgestellt werden.

Der den Reformer verlassende Gasstrom enthält größere Mengen an CO, das die in PEM-Brennstoffzellen enthaltenen Katalysatoren inaktivieren würde. Aus diesem Grunde sind in das System zwischen Reformer 51 und Brennstoffzellen 62 mehrere chemische Reinigungsstufen 55, 56 integriert, die unter Zusatz von Wasser das Kohlenmonoxid in Kohlendioxid und Wasserstoff überführen. Zusätzlich sind nach den Reinigungsstufen optional Wärmetauscher 57, 58 zur Abfuhr der Reaktionswärme vorgesehen.

Eine Dosierung von Kraftstoff mittels der erfindungsgemäßen Dosiereinheit wird in einem solchen System bevorzugt zwischen einem Kraftstofftank 59 und dem Verdampfer 52 an einer ersten Stelle 101 bzw. zwischen dem Kraftstofftank 59 und dem Reformer 51 an einer zweiten Stelle 102 erfolgen sowie nach Bedarf zwischen Kraftstofftank 59 und katalytischem Brenner 54 an einer dritten Stelle 103.

Eine Dosierung von Reinstwasser ist zwischen einem Wassertank 60 und den Wärmetauschern 57, 58 an einer vierten Stelle 104 vorgesehen, zwischen dem Wassertank 60 und den Brennstoffzellen 62 an einer fünften Stelle 105, zwischen Wassertank 60 und den Reinigungsstufen 55, 56 an einer sechsten Stelle 106 und zwischen der Reinigungsstufe 55 und einem Verdampfer 53 an einer siebten Stelle 107.

Je nach Verfahrensvariante ist auch eine Zudosierung von Luft erforderlich. Diese erfolgt vor allem zwischen einem Kompressor 61 und dem katalytischen Brenner 54 an einer achten Stelle 108, zwischen dem Kompressor 61 und der Reinigungsstufe 56 an einer neunten Stelle 109, zwischen dem Kompressor 61 und den Brennstoffzellen 62 an einer zehnten Stelle 110 und zwischen dem Kompressor 61 und einem Reformer 51 an einer weiteren Stelle 111.

Die erfindungsgemäße Dosiereinheit ist nicht auf die beschriebenen Ausführungsbeispiele beschränkt, sondern es sind weitere Ausgestaltungen einer Dosiereinheit mit zwei gekoppelten Drosselvorrichtungen denkbar. Darüber hinaus kann die erfindungsgemäße Dosiereinheit mit einer Zerstäubungsanordnung gekoppelt sein, um beispielsweise flüssige Edukte in dosierter Menge und feinstverteilter Form dem Reformer zuzuführen.

## Patentansprüche

1. Dosiereinheit zur Dosierung von flüssigen und/oder gasförmigen Edukten mittels einer Förderpumpe für ein Brennstoffzellensystem mit mindestens einer Zuleitung für die Zufuhr eines Eduktstromes, mindestens einem Steuerkolben und einem Differenzdruckventil zur Regulierung des Eduktstromes, wobei das Differenzdruckventil einen regulierbaren Drosselquerschnitt aufweist, der zur Regulierung des Eduktstromes in Abhängigkeit von einem durch den Steuerkolben bedingten Strömungsdruck selbsttätig veränderbar ist, **dadurch gekennzeichnet, daß** die Zuleitung (16) dem Steuerkolben (12) zugeführt ist und vom Steuerkolben (12) eine erste und eine zweite Verbindungsleitung (28, 28', 29) zum Differenzdruckventil (14, 14') führt.

2. Dosiereinheit nach Anspruch 1, **dadurch gekennzeichnet, daß** die Position des Steuerkolbens (12) in der Zuleitung (16) mittels eines Proportionalmagneten (18) variierbar ist.

3. Dosiereinheit nach Anspruch 1 oder 2, **dadurch gekennzeichnet, daß** der Steuerkolben (12) eine Steuerkante (22) aufweist, deren Position in der Zuleitung (16) die Größe eines weiteren regulierbaren Drosselquerschnitts (24) zur Regulierung des Eduktstromes vorgibt.

4. Dosiereinheit nach mindestens einem der Ansprüche 1 bis 3, **dadurch gekennzeichnet, daß** ein Wegsensor (20) zur Bestimmung der Position des Steuerkolbens (12) in der Zuleitung (16) vorgesehen ist.

5. Dosiereinheit nach mindestens einem der Ansprüche 1 bis 4, **dadurch gekennzeichnet, daß** das Differenzdruckventil (14, 14') einen beweglichen, federgestützten Kolben enthält, dessen Position den Drosselquerschnitt (39) des Differenzdruckventils (14, 14') zur Regulierung des Eduktstromes vorgibt.

6. Dosiereinheit nach mindestens einem der Ansprüche 1 bis 4, **dadurch gekennzeichnet, daß** das Differenzdruckventil (14) eine bewegliche Membran (36) enthält, deren Verformung den Drosselquerschnitt (39) des Differenzdruckventils (14, 14') zur Regulierung des Eduktstromes vorgibt.

7. Dosiereinheit nach Anspruch 5 und 6, **dadurch gekennzeichnet, daß** das Differenzdruckventil (14, 14') eine obere Ventilkammer (34) und eine untere Ventilkammer (32, 32') enthält, die durch den Kolben oder die Membran (36) voneinander getrennt sind.

8. Dosiereinheit nach Anspruch 7, **dadurch gekennzeichnet, daß** die untere Ventilkammer (32, 32') des Differenzdruckventils (14, 14') mit dem in der Zuleitung (16) herrschenden Flüssigkeits- bzw. Gasdruck beaufschlagt ist und die obere Ventilkammer (34) mit dem durch den Steuerkolben (12) verminderten Flüssigkeits- bzw. Gasdruck beaufschlagt ist.

9. Dosiereinheit nach mindestens einem der Ansprüche 1 bis 8, **dadurch gekennzeichnet, daß** mindestens eine der Verbindungsleitungen (28, 28', 29) eine Drossel (43) aufweist.

10. Dosiereinheit nach mindestens einem der Ansprüche 7 bis 9, **dadurch gekennzeichnet, daß** die untere Ventilkammer (32') eine Ableitung (42) aufweist, und daß die Ableitung (42) eine weitere Drossel (44) beinhaltet.

11. Verfahren zur Dosierung flüssiger oder gasförmiger Edukte mittels einer Dosiereinheit für ein Brennstoffzellensystem nach mindestens einem der Ansprüche 1 bis 10, **dadurch gekennzeichnet, daß** zur Vermeidung von Druckschwankungen ein Differenzdruckventil (14, 14') eingesetzt wird, dessen Drosselquerschnitt (39) sich in Abhängigkeit von einem durch einen Steuerkolben (12) bedingten Strömungsdruck selbsttätig verändert.

12. Verfahren nach Anspruch 11, **dadurch gekennzeichnet, daß** mittels der Dosiereinheit eine Dosierung von Kraftstoff zwischen einem Kaftstofftank (59) und einem Verdampfer (52) an einer ersten Stelle (101) und/oder zwischen dem Kraftstofftank (59) und einem Reformer (51) an einer zweiten Stelle (102) und/oder zwischen dem Kraftstofftank (59) und einem katalytischen Brenner (54) an einer dritten Stelle (103) erfolgt.

13. Verfahren nach Anspruch 11 oder 12, **dadurch gekennzeichnet, daß** mittels der Dosiereinheit eine Dosierung von Wasser zwischen dem Wassertank (60) und einem Wärmetauscher (57, 58) an einer vierten Stelle (104) und/oder zwischen dem Wassertank (60) und einer Brennstoffzelle (62) an einer fünften Stelle (105) und/oder zwischen einem Wassertank (60) und einer Reinigungsstufe (55, 56) an einer sechsten Stelle (106) und/oder zwischen der Reinigungsstufe (55) und einem Verdampfer (53) an einer siebten Stelle (107) erfolgt.

14. Verfahren nach mindestens einem der Ansprüche 11 bis 13, **dadurch gekennzeichnet, daß** mittels der Dosiereinheit eine Dosierung von Luft zwischen einem Kompressor (61) und einem katalytischen Brenner (54) an einer achten Stelle (108) und/oder zwischen dem Kompressor (61) und einer Reinigungsstufe (56) an einer neunten Stelle (109) und/oder zwischen dem Kompressor (61) und einer Brennstoffzelle (62) an einer zehnten Stelle (110) erfolgt und/oder zwischen dem Kompressor (61) und einem Reformer (51) an einer weiteren Stelle (111).

15. Verwendung einer Dosiereinheit nach mindestens einem der Ansprüche 1 bis 10 zur Zerstäubung flüssiger Edukte eines Reformers für Brennstoffzellen.

## Claims

1. Metering unit for metering liquid and/or gaseous starting materials by means of a feed pump for a fuel cell system, having at least one feed line for supplying a starting-material flow, at least one control piston and a differential pressure valve for regulating the starting-material flow, the differential pressure valve having a regulatable throttling cross section which, to regulate the starting-material flow, can be changed automatically as a function of a flow pressure caused by the control piston, **characterized in that** the feed line (16) leads to the control piston (12), and a first and a second connecting line (28, 28', 29) lead from the control piston (12) to the differential pressure valve (14, 14').

2. Metering unit according to Claim 1, **characterized in that** the position of the control piston (12) in the feed line (16) can be varied by means of a proportional magnet (18).

3. Metering unit according to Claim 1 or 2, **characterized in that** the control piston (12) has a control edge (22), the position of which in the feed line (16) predetermines the size of a further regulatable throttling cross section (24) for regulating the starting-material flow.

4. Metering unit according to at least one of Claims 1 to 3, **characterized in that** there is a displacement sensor (20) for determining the position of the control piston (12) in the feed line (16).

5. Metering unit according to at least one of Claims 1 to 4, **characterized in that** the differential pressure valve (14, 14') includes a movable, springloaded piston, the position of which predetermines the throttling cross section (39) of the differential pressure valve (14, 14') for regulating the starting-material flow.

6. Metering unit according to at least one of Claims 1 to 4, **characterized in that** the differential pressure valve (14) includes a movable diaphragm (36), the deformation of which predetermines the throttling cross section (39) of the differential pressure valve (14, 14') for regulating the starting-material flow.

7. Metering unit according to Claims 5 and 6, **characterized in that** the differential pressure valve (14, 14') includes an upper valve chamber (34) and a lower valve chamber (32, 32'), which are separated from one another by the piston or the diaphragm (36).

8. Metering unit according to Claim 7, **characterized in that** the lower valve chamber (32, 32') of the differential pressure valve (14, 14') is acted on by the liquid or gas pressure prevailing in the feed line (16), and the upper valve chamber (34) is acted on by the liquid or gas pressure which has been reduced by the control piston (12).

9. Metering unit according to at least one of Claims 1 to 8, **characterized in that** at least one of the connecting lines (28, 28', 29) has a throttle (43).

10. Metering unit according to at least one of Claims 7 to 9, **characterized in that** the lower valve chamber (32') has an outlet line (42), and **in that** the outlet line (42) includes a further throttle (44).

11. Method for metering liquid or gaseous starting materials by means of a metering unit for a fuel cell system according to at least one of Claims 1 to 10, **characterized in that** to avoid pressure fluctuations a differential pressure valve (14, 14') is used, the throttling cross section (39) of which changes automatically as a function of a flow pressure caused by a control piston (12).

12. Method according to Claim 11, **characterized in that** the metering unit is used to meter fuel between a fuel tank (59) and an evaporator (52) at a first location (101) and/or between the fuel tank (59) and a reformer (51) at a second location (102) and/or between the fuel tank (59) and a catalytic burner (54) at a third location (103).

13. Method according to Claim 11 or 12, **characterized in that** the metering unit is used to meter water between the water tank (60) and a heat exchanger (57, 58) at a fourth location (104) and/or between the water tank (60) and a fuel cell (62) at a fifth location (105) and/or between a water tank (60) and a purification stage (55, 56) at a sixth location (106) and/or between the purification stage (55) and an evaporator (53) at a seventh location (107).

14. Method according to at least one of Claims 11 to 13, **characterized in that** the metering unit is used to meter air between a compressor (61) and a catalytic burner (54) at an eighth location (108) and/or between the compressor (61) and a purification stage (56) at a ninth location (109) and/or between the compressor (61) and a fuel cell (62) at a tenth location (110) and/or between the compressor (61) and a reformer (51) at a further location (111).

15. Use of a metering unit according to at least one of Claims 1 to 10 for atomizing liquid starting materials for a reformer for fuel cells.

## Revendications

1. Unité de dosage pour doser des éduits liquides et/ou gazeux au moyen d'une pompe de circulation pour un système de piles à combustible, comprenant au moins une conduite d'arrivée pour amener un courant d'éduit, au moins un piston de commande et une soupape à pression différentielle pour réguler le courant d'éduit, la soupape à pression différentielle présentant une section transversale d'étranglement réglable pouvant être modifiée automatiquement en fonction d'une pression d'écoulement conditionnée par le piston de commande pour réguler le courant d'éduit,
**caractérisée en ce que**
la conduite d'arrivée (16) conduit au piston de commande (12) et une première et une deuxième conduites de liaison (28, 28', 29) conduisent du piston de commande (12) à la soupape à pression différentielle (14, 14').

2. Unité de dosage selon la revendication 1,
**caractérisée en ce que**
la position du piston de commande (12) dans la conduite d'amenée (16) peut être modifiée au moyen d'un aimant proportionnel (18).

3. Unité de dosage selon la revendication 1 ou 2,
**caractérisée en ce que**
le piston de commande (12) comprend une arête de commande (22), dont la position détermine dans la conduite d'arrivée (16) la grandeur d'une autre section transversale d'étranglement (24) réglable pour réguler le courant d'éduit.

4. Unité de dosage selon au moins l'une quelconque des revendications 1 à 3,
**caractérisée en ce qu'**
un capteur de déplacement (20) est prévu pour déterminer la position du piston de commande (12) dans la conduite d'arrivée (16).

5. Unité de dosage selon au moins l'une quelconque des revendications 1 à 4,
**caractérisée en ce que**
la soupape à pression différentielle (14, 14') contient un piston à ressort mobile, dont la position détermine la section transversale d'étranglement (39) de la soupape à pression différentielle (14, 14') pour réguler le courant d'éduit.

6. Unité de dosage selon au moins l'une quelconque des revendications 1 à 4,
**caractérisée en ce que**
la soupape à pression différentielle (14) contient une membrane mobile (36), dont la déformation détermine la section transversale d'étranglement (39) de la soupape à pression différentielle (14, 14') pour réguler le courant d'éduit.

7. Unité de dosage selon la revendication 5 et 6,
**caractérisée en ce que**
la soupape à pression différentielle (14, 14') contient une chambre de soupape supérieure (34) et une chambre de soupape inférieure (32, 32') séparées l'une de l'autre par le piston ou la membrane (36).

8. Unité de dosage selon la revendication 7,
**caractérisée en ce que**
la chambre de soupape inférieure (32, 32') de la soupape à pression différentielle (14, 14') subit la pression de liquide ou de gaz régnant dans la conduite d'arrivée (16) et la chambre de soupape supérieure (34) subit la pression de liquide ou de gaz réduite par le piston de commande (12).

9. Unité de dosage selon au moins l'une quelconque des revendications 1 à 8,
**caractérisée en ce qu'**
au moins l'une des conduites de liaison (28, 28', 29) présente un étranglement (43).

10. Unité de dosage selon au moins l'une quelconque des revendications 7 à 9,
**caractérisée en ce que**
la chambre de soupape inférieure (32') présente une conduite d'évacuation (42), et la conduite d'évacuation (42) contient un autre étranglement (44).

11. Procédé de dosage d'éduits liquides ou gazeux au moyen d'une unité de dosage pour un système de piles à combustible selon au moins l'une quelconque des revendications 1 à 10,
**caractérisé en ce que**
pour éviter des variations de pression on utilise une soupape à pression différentielle (14, 14'), dont la section transversale d'étranglement (39) se modifie automatiquement en fonction d'une pression d'écoulement conditionnée par un piston de commande (12).

12. Procédé selon la revendication 11,
**caractérisé en ce que**
l'unité de dosage effectue un dosage de carburant entre un réservoir de carburant (59) et un évaporateur (52) à un premier endroit (101), et/ou entre le réservoir de carburant (59) et un reformeur (51) à un deuxième endroit (102), et/ou entre un réservoir de carburant (59) et un brûleur catalytique (54) à un troisième endroit (103).

13. Procédé selon la revendication 11 ou 12,
**caractérisé en ce que**
l'unité de dosage effectue un dosage d'eau entre le réservoir d'eau (60) et un échangeur thermique (57, 58) à un quatrième endroit (104), et/ou entre le réservoir d'eau (60) et une pile à combustible (62) à un cinquième endroit (105), et/ou entre un réservoir d'eau (60) et un niveau de nettoyage (55, 56) à un sixième endroit (106), et ou entre le niveau de nettoyage (55) et un évaporateur (53) à un septième endroit (107).

14. Procédé selon au moins l'une quelconque des revendications 11 à 13,
**caractérisé en ce que**
l'unité de dosage effectue un dosage d'air entre un compresseur (61) et un brûleur catalytique (54) à un huitième endroit (108), et/ou entre le compresseur (61) et un niveau de nettoyage (56) à un neuvième endroit (109), et/ou entre le compresseur (61) et une pile à combustible (62) à un dixième endroit (110), et/ou entre le compresseur (61) et un reformeur (51) à un autre endroit (111).

15. Utilisation d'une unité de dosage selon au moins l'une quelconque des revendications 1 à 10, pour pulvériser des éduits liquides d'un reformeur pour piles à combustibles.
